# FASCICULE DE BREVET EUROPEEN

(11) **EP 0 643 548 B1**
(45) Date de publication et mention de la délivrance du brevet: **10.11.1999**
(21) Numéro de dépôt: 94401970.2
(22) Date de dépôt: 06.09.1994
(51) Int. Cl.: H05B 3/86

(54) **Vitrage feuilleté pouvant être chauffé électriquement**
Elektrische beheizte Verbundglasscheibe
Electrically heated laminated glass window

(30) Priorité: 09.09.1993 DE 4330499
(43) Date de publication de la demande: 15.03.1995
(73) Titulaire: SAINT-GOBAIN VITRAGE, 92400 Courbevoie (FR)
(72) Inventeur: Triebs, Friedrich, D-52076 Aachen (DE); Broering, Karin, D-41068 Moenchengladbach (DE)
(74) Mandataire: Muller, René

(56) Documents cités:
- EP-A- 0 058 445
- EP-A- 0 506 521
- FR-A- 1 533 535
- US-A- 2 982 934
- US-A- 3 895 433
- US-A- 4 918 288

## Description

La présente invention concerne un vitrage feuilleté pouvant être chauffé électriquement comportant des fils chauffants placés dans la couche intermédiaire en matière thermoplastique et branchés en parallèle qui sont enrobés, le long d'au moins l'un des bords du vitrage, entre deux rubans de clinquant perpendiculaires à ces fils chauffants et qui sont en contact électrique avec ces rubans de clinquant, qui jouent le rôle de barres omnibus.

Un vitrage pouvant être chauffé électriquement de ce genre est connu, par exemple, grâce au document BE 0 490 723 A1.

Comme fils chauffants, on utilise souvent, dans les vitrages chauffants de ce genre, de fins fils de tungstène rectilignes ou ondulés, qui sont déposés sur la couche intermédiaire de matière thermoplastique. Pour assurer un contact aussi bon que possible entre les barres omnibus et les fils chauffants, les barres omnibus sont faites de rubans de clinquant de cuivre étamés au moins sur une face. Les deux rubans de clinquant entre lesquels se trouvent les fils chauffants, et qui sont étamés de ce côté, sont chauffés d'une manière appropriée, par exemple à l'aide d'un fer à souder, de sorte que les deux couches d'étain se réunissent en fondant et englobent les fils de tungstène.

Toutefois, on sait que les fils de tungstène ne se soudent pas, ou ne se soudent qu'incomplètement avec les alliages pour soudure à l'étain. Avec les vitrages chauffants connus, il peut donc arriver que, après le soudage des deux rubans de clinquant, des passages capillaires subsistent à côté des fils chauffants. Si les rubans de clinquant sont placés directement au bord du vitrage ou que les fils chauffants dépassent ces barres omnibus pour aller jusqu'au bord du vitrage, il peut arriver, en cas de présence de tels capillaires que de l'humidité pénètre par diffusion par ces capillaires, dans des conditions les plus défavorables. Cela peut provoquer occasionnellement des modifications visibles ou des phénomènes de corrosion sur les fils chauffants, ou les deux. Dans certaines cisconstances, ceci peut même aboutir à la mise hors service d'un conducteur chauffant.

L'invention a pour but de procurer des vitrages feuilletés chauffants du type spécifié, dans lesquels le risque de modifications provoquées par la diffusion d'humidité est exclu ou du moins considérablement réduit.

Ce but est atteint, suivant l'invention, par le fait qu'une couche de colle conductrice de l'électricité est placée entre les deux rubans de clinquant et enrobe les fils chauffants de manière hermétique.

Dans le vitrage feuilleté de l'invention, les deux rubans de clinquant sont donc reliés l'un à l'autre par une couche de colle conductrice de l'électricité en lieu et place d'une couche de soudure à l'étain. En même temps, cette couche de colle conductrice adhère sur toute la surface cylindrique des fils, dans la zone comprise entre les deux rubans de clinquant, et elle réalise le contact électrique entre les rubans de clinquant et les fils.

Il est judicieux que la couche de colle soit d'une épaisseur correspondant à peu près au diamètre des fils chauffants. Le but visé peut aussi être atteint avec des couches de colle moins épaisses, mais cela implique que les rubans de clinquant se déforment légèrement là où se trouvent les fils et épousent leurs formes. La pression appliquée dans les autoclaves lors du processus d'assemblage, pendant la fabrication des vitrages feuilletés, est en général suffisante pour cela.

Il est toutefois avantageux de choisir l'épaisseur de la couche de colle de telle façon qu'elle enrobe entièrement les fils même sans déformation des rubans de clinquant.

Dans un mode de réalisation avantageux de l'invention, la couche de colle est constituée par de la colle de contact appliquée d'un seul côté ou des deux côtés sur les rubans de clinquant. En général, les colles de contact sont suffisamment molles et déformables pour s'adapter à la surface des fils même sous une pression relativement faible. En outre, leur caractère collant permanent assure une adhérence durable aux surfaces des fils et aux rubans de clinquant, de sorte que de telles colles de contact conviennent particulièrement au but de l'invention.

Selon un développement particulièrement adéquat de l'invention, une couche de colle est également prévue sur la surface du ruban de clinquant placé par-dessus les fils qui s'applique sur le vitrage, cette couche de colle étant également constituée, de préférence, par une colle de contact. De cette manière, on réalise un collage étanche également entre ce ruban de clinquant et la surface du verre, ce qui est avantageux en particulier quand cette barre omnibus est placée directement au bord du vitrage ou à une faible distance du bord, c'est-à-dire si la couche de matière thermoplastique intermédiaire n'assure qu'une étanchéité insuffisante en dehors de la barre omnibus.

L'invention peut être réalisée, par exemple, en utilisant pour le ruban de clinquant inférieur du clinquant de cuivre sans couche de colle, tandis que le ruban de clinquant supérieur est du clinquant de cuivre recouvert d'un côté ou des deux côtés d'une couche de colle de contact. On peut fixer le ruban inférieur de la façon habituelle sur la couche de matière thermoplastique intermédiaire en le posant, à l'endroit souhaité, sur la pellicule de matière thermoplastique et en le collant à la pellicule ramollie par la chaleur, par exemple en appuyant dessus à l'aide d'un rouleau chauffé. Après que les fils ont été posés sur la pellicule et sur les rubans de cuivre, le ruban de cuivre recouvert de colle est à présent déposé et pressé sur les rubans de cuivre existants.

D'autres particularités et avantages de l'invention ressortent de la description qui va suivre, d'un exemple de réalisation préféré donné avec référence au dessin annexé, dans lequel :
la Fig. 1 est une vue en perspective d'un vitrage chauffant automobile conforme à l'invention, et
la Fig. 2 est une représentation, à plus grande échelle, d'un détail vu en coupe suivant la ligne II-II de la Fig. 1.

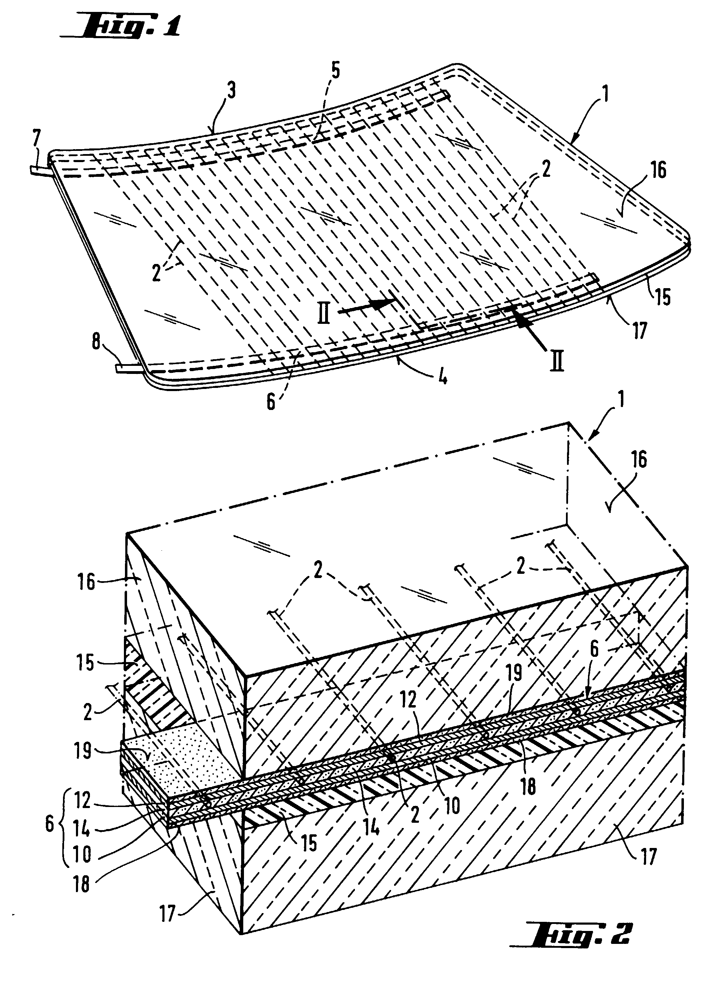

Comme le montre la Fig. 1, le vitrage feuilleté 1, qui est, dans le cas représenté, un vitrage automobile chauffant pour lunette arrière, présente des fils chauffants 2 placés parallèlement les uns aux autres et qui vont du bord supérieur 3 du vitrage à son bord inférieur 4. Ces fils chauffants 2 sont de minces fils de tungstène de 20 à 50 µm de diamètre, qui sont mis en place suivant des méthodes connues, avant la réalisation du vitrage feuilleté, sur la pellicule thermoplastique en polyvinylbutyral disposée entre les deux feuilles de verre du vitrage feuilleté. Les fils chauffants 2 sont espacés, par exemple, de 3 à 15 mm.

Les fils chauffants 2 sont reliés en parallèle à deux barres omnibus 5 et 6 placées à une faible distance du bord supérieur 5 et du bord inférieur 6 du vitrage et parallèlement à ces bords. Les barres omnibus 5 et 6 dépassent d'un côté du vitrage feuilleté, et leurs extrémités 7 et 8 servent pour le branchement au réseau électrique de bord.

La structure des barres omnibus 5 et 6 est indiquée en détail sur la Fig. 2. Elles comprennent un ruban de clinquant de cuivre 10 placé au-dessous des fils 2 et un ruban de clinquant de cuivre 12 placé au-dessus des fils 2. Entre les deux rubans de clinquant de cuivre 10 et 12 se trouve la couche 14 de colle de contact conductrice de l'électricité. L'épaisseur de la couche de colle 14 correspond à peu près au diamètre des fils 2. Cette colle peut être, par exemple, une colle de contact conductrice de l'électricité, à base d'acrylate.

Entre le ruban de clinquant de cuivre inférieur 10 et la couche de matière thermoplastique intermédiaire 15 qui assemble les deux feuilles de verre, se trouve également une mince couche 18 de colle de contact. De même, une couche 19 de colle de contact est placée sur le ruban de clinquant de cuivre supérieur 12, entre ce dernier et la feuille de verre 16. Cette couche de colle 19 assure entre le ruban de clinquant de cuivre 12 et la feuille de verre 16 un collage étanche empêchant la diffusion. La même colle est employée pour les couches de colle 14, 18 et 19. De préférence, la colle 19 devrait être teintée en noir pour rendre moins visibles les défauts de la couche de fond.

Pour la fabrication d'un tel vitrage feuilleté chauffant, il est recommandé d'utiliser, pour les barres omnibus 5 et 6, des rubans de clinquant de cuivre pourvus d'avance, sur une face ou sur les deux, de la couche de colle de contact conductrice de l'électricité. Des rubans de clinquant de cuivre enduits d'avance de ce genre peuvent, par exemple, être envidés en rouleaux avec interposition d'un ruban de séparation, de sorte qu'il est facile de les poser suivant la procédure désirée et de poursuivre leur traitement.

La fabrication du vitrage chauffant représenté au dessin se fait de la manière suivante : les deux feuilles de verre individuelles 16 et 17 sont coupées de la façon habituelle et bombées à la forme voulue. Indépendamment de cela, on prépare la couche de matière thermoplastique intermédiaire 15 avec les barres omnibus 5 et 6 et les fils chauffants 2. Dans ce but, on pose tout d'abord sur une pellicule de polyvinylbutyral de 0,76 mm d'épaisseur, aux endroits prévus pour y disposer les barres omnibus, les rubans de clinquant de cuivre inférieurs. On emploie pour cela des rubans de clinquant de cuivre recouverts sur les deux faces d'une couche de colle de contact conductrice de l'électricité, à base d'acrylate, d'environ 20 µm d'épaisseur. En interposant une feuille de séparation, on envide le ruban de clinquant de cuivre pour former un rouleau, et on peut l'appliquer sur la pellicule de polyvinylbutyral à l'aide d'un dispositif dérouleur approprié. Tandis que, lorsqu'on pose le ruban de clinquant de cuivre, la face inférieure recouverte de colle adhère directement sur la pellicule de polyvinylbutyral, la feuille de séparation reste tout d'abord sur la face supérieure, à laquelle elle adhère. Si nécessaire, en pressant encore une fois le ruban de clinquant de cuivre ainsi posé, avec un rouleau de pression approprié, on peut accroître l'adhérence à la pellicule de polyvinylbutyral.

Les feuilles de séparation qui se trouvent sur les rubans de clinquant de cuivre sont ensuite enlevées. Des fils de tungstène d'environ 30 µm d'épaisseur sont ensuite déposés sur la pellicule de polyvinylbutyral et fixés à la surface de cette pellicule sous l'effet d'un apport de chaleur et d'une pression. La mise en place des fils chauffants peut se faire, par exemple, avec un dispositif tel que celui qui est décrit dans le document DE-OS 1 596 885 A1. Les fils de tungstène sont amenés au-dessus des rubans de clinquant de cuivre enduits de colle et sont fixés sur les rubans de clinquant de cuivre par la couche de colle de contact.

Après que tous les fils chauffants ont été déposés sur la pellicule de polyvinylbutyral, les rubans de clinquant de cuivre supérieurs sont posés sur les rubans de clinquant de cuivre collés sur la pellicule de polyvinylbutyral selon la même méthode que celle qui a été employée pour déposer ceux-ci. Ce faisant, les fils chauffants des deux rubans de clinquant de cuivre sont enrobés dans les couches de colle. La couche intermédiaire en matière thermoplastique est à présent préparée pour la suite du traitement.

Avant d'assembler la couche intermédiaire ainsi préparée, avec les deux feuilles de verre individuelles, on enlève les feuilles de séparation qui se trouvent sur les rubans de clinquant de cuivre supérieurs. Après l'assemblage des différentes couches, la structure feuilletée est désaérée d'une manière connue, par un traitement à dépression. Ensuite, les éléments constitutifs de la structure feuilletée sont assemblés définitivement dans un autoclave à une température d'environ 140 degrés Celsius et sous une pression d'environ 12 bars. Pendant ce traitement en autoclave, les dernières bulles et les derniers capillaires subsistant encore éventuellement entre les couches de colle superposées des deux rubans de clinquant de cuivre sont éliminés et on obtient un assemblage intime et durable de la colle avec les fils. De même, l'assemblage solide et durable du ruban de clinquant de cuivre supérieur et de la feuille de verre avec laquelle il est en contact se fait aussi à cette occasion. La possibilité de pénétration de l'humidité par diffusion est ainsi exclue de façon durable.

## Revendications

1. Vitrage feuilleté pouvant être chauffé électriquement, comportant des fils chauffants placés dans la couche intermédiaire en matière thermoplastique et branchés en parallèle, qui sont enrobés, le long d'au moins l'un des bords du vitrage, entre deux rubans de clinquant perpendiculaires aux fils chauffants et qui sont en contact électrique avec ces rubans de clinquant qui jouent le rôle de barres omnibus, caractérisé en ce qu'une couche (14) de colle conductrice de l'électricité est placée entre les deux rubans de clinquant (10, 12), et enrobe les fils chauffants (2) de manière hermétique.

2. Vitrage feuilleté pouvant être chauffé électriquement suivant la revendication 1, caractérisé en ce que la couche (14) de colle conductrice de l'électricité a une épaisseur correspondant au diamètre des fils chauffants (2).

3. Vitrage feuilleté pouvant être chauffé électriquement suivant la revendication 1 ou 2, caractérisé en ce que la couche de colle (14) enrobant les fils chauffants (2) est constituée par de la colle de contact dont au moins le ruban de clinquant de cuivre (10) placé au-dessous des fils chauffants (2) est recouvert, au moins sur la face qui est en contact avec les fils chauffants (2).

4. Vitrage feuilleté pouvant être chauffé électriquement, suivant les revendications 1 à 3, caractérisé en ce que le ruban de clinquant de cuivre (12) placé au-dessus des fils chauffants (2) est pourvu, sur sa surface supérieure, d'une couche (19) de colle qui réalise un assemblage étanche, empêchant la diffusion, du ruban de clinquant de cuivre (12) et de la feuille de verre (16).

5. Vitrage feuilleté pouvant être chauffé électriquement suivant l'une des revendications 1 à 4, caractérisé en ce que les rubans de clinquant de cuivre (10, 12) constituant les barres omnibus (5, 6) sont pourvus sur leurs deux faces d'une couche de colle (14, 18, 19) de contact.

6. Vitrage feuilleté pouvant être chauffé électriquement, suivant l'une des revendications 1 à 5, caractérisé en ce que les fils chauffants (2) sont des fils de tungstène de 20 à 40 µm d'épaisseur.

## Patentansprüche

1. Elektrisch beheizbare Verbundglasscheibe mit in der thermoplastischen Zwischenschicht angeordneten parallel geschalteten Heizdrähten, die entlang wenigstens einer Scheibenkante zwischen zwei quer zu den Heizdrähten verlaufenden Metallfolienbändern eingebettet und mit diesen als Sammelschienen dienenden Metallfolienbändern elektrisch kontaktiert sind,
**dadurch gekennzeichnet, daß** zwischen den beiden Metallfolienbändern (10,12) eine die Heizdrähte (2) dicht umschließende Schicht (14) aus einem elektrisch leitfähigen Kleber angeordnet ist.

2. Elektrisch beheizbare Verbundglasscheibe nach Anspruch 1, **dadurch gekennzeichnet,** daß die Schicht (14) des elektrisch leitfähigen Klebers eine dem Durchmesser der Heizdrähte (2) entsprechende Dicke aufweist.

3. Elektrisch beheizbare Verbundglasscheibe nach Anspruch 1 oder 2, **dadurch gekennzeichnet,** daß die die Heizdrähte (2) einbettende Kleberschicht (14) aus einem Haftkleber besteht, mit dem wenigstens das unterhalb der Heizdrähte (2) angeordnete Kupferfolienband (10) wenigstens auf der an den Heizdrähten (2) anliegenden Seite beschichtet ist.

4. Elektrisch beheizbare Verbundglasscheibe nach Anspruch 1 bis 3, **dadurch gekennzeichnet,** daß das oberhalb der Heizdrähte (2) angeordnete Kupferfolienband (12) auf der oberen Oberfläche mit einer Kleberschicht (19) versehen ist, die eine diffusionsdichte Verbindung zwischen dem Kupferfolienband (12) und der Glasscheibe (16) herstellt.

5. Elektrisch beheizbare Verbundglasscheibe nach einem der Ansprüche 1 bis 4, **dadurch gekennzeichnet,** daß die die Sammelschienen (5,6) bildenden Kupferfolienbänder (10,12) auf beiden Seiten mit einer Haftkleberschicht (14,18,19) versehen sind.

6. Elektrisch beheizbare Verbundglasscheibe nach einem der Ansprüche 1 bis 5, **dadurch gekennzeichnet,** daß die Heizdrähte (2) aus 20 bis 40 µm dicken Wolframdrähten bestehen.

## Claims

1. Laminated glazing which can be electrically heated, having heating wires placed in the intermediate, thermoplastics material layer and connected in parallel and which, along at least one of the edges of the glazing, are embedded between two foil ribbons perpendicular to the heating wires and which are in electrical contact with said foil ribbons, which serve as bus-bars, characterized in that an electricity-conducting adhesive layer (14) is placed between the two foil ribbons (10, 12) and hermetically covers the heating wires (2).

2. Laminated glazing which can be heated electrically according to claim 1, characterized in that the electricity-conducting adhesive layer (14) has a thickness corresponding to the diameter of the heating wires (2).

3. Laminated glazing which can be electrically heated according to claim 1 or 2, characterized in that the adhesive layer (4) covering the heating wires (2) is constituted by contact adhesive and covers at least the copper foil ribbon (10) placed below the heating wires (2), at least on the face in contact with said heating wires (2).

4. Laminated glazing which can be electrically heated according to claims 1 to 3, characterized in that the copper foil ribbon (12) placed above the heating wires (2) is provided, on its upper face, with an adhesive coating (19), which brings about a tight assembly, preventing diffusion, from the copper foil ribbon (12) and the glass sheet (16).

5. Laminated glazing can be electrically heated according to one of the claims 1 to 4, characterized in that the copper foil ribbons (10, 12) constituting the bus-bars (5, 6) are provided on both their faces with a contact adhesive layer (14, 18, 19).

6. Laminated glazing which can be electrically heated according to one of the claims 1 to 5, characterized in that the heating wires (2) are 20 to 40 µm thick tungsten wires.
